(19) Europäisches Patentamt
European Patent Office
Office européen des brevets

(11) EP 2 439 858 B1

(12) **EUROPEAN PATENT SPECIFICATION**

(45) Date of publication and mention of the grant of the patent:
**14.03.2018 Bulletin 2018/11**

(21) Application number: **11183825.6**

(22) Date of filing: **04.10.2011**

(51) Int Cl.:
***H04B 7/06*** *(2006.01)*
***H04W 52/42*** *(2009.01)*
***H04B 7/0426*** *(2017.01)*
***H04L 25/03*** *(2006.01)*
*H04L 5/00* *(2006.01)*

(54) **METHOD AND APPARATUS FOR SPATIAL MULTIPLEXING TRANSMISSION**

VERFAHREN UND VORRICHTUNG ZUR RÄUMLICHEN MULTIPLEXING-ÜBERTRAGUNG

PROCÉDÉ ET APPAREIL POUR TRANSMISSION DE MULTIPLEXAGE SPATIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**05.10.2010 KR 20100096780**
**25.03.2011 KR 20110026741**
**04.05.2011 KR 20110042563**
**04.10.2011 KR 20110100768**

(43) Date of publication of application:
**11.04.2012 Bulletin 2012/15**

(73) Proprietors:
- **Electronics and Telecommunications Research Institute**
  **Daejeon-si 305-700 (KR)**
- **Institute For Research & Industry Cooperation Pusan National University**
  **Busan 609-735 (KR)**

(72) Inventors:
- **Lim, Hyoung Soo**
  **Daejeon-si 305-761 (KR)**
- **Bae, Jae Hwui**
  **Daejeon-si 305-770 (KR)**
- **Lee, Gwang Soon**
  **Daejeon-si 305-747 (KR)**
- **Seo, Jae Hyun**
  **Daejeon-si 305-749 (KR)**
- **Jung, Tae Jin**
  **Gwangju-si 500-757 (KR)**
- **Kim, Jun Ho**
  **Gwangju-si 500-757 (KR)**
- **Kim, Ho Jun**
  **Gwangju-si 500-757 (KR)**
- **Kim, Hyung Nam**
  **Busan 611-766 (KR)**
- **Suh, Ki Hwan**
  **Busan 607-787 (KR)**

(74) Representative: **Betten & Resch**
**Patent- und Rechtsanwälte PartGmbB**
**Maximiliansplatz 14**
**80333 München (DE)**

(56) References cited:
**US-A1- 2003 185 309**
**US-A1- 2008 037 679**
**US-A1- 2010 195 759**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 439 858 B1

## Description

### Field of the Invention

The present invention relates to a wireless communication technology, and more particularly, a method and apparatus for spatial multiplexing transmission in a multiple input multiple output (MIMO) system.

### Background of the Invention

In the MIMO technology using a multi-antenna system, a high data transmission rate is obtained through multiple transmitting and receiving antennas.

Meanwhile, in the MIMO technology, performance degradation occurs if a correlation is produced between transmitting and receiving antennas. In general, the prior art MIMO technology is applied to a mobile communication system. In this case, the antennas are designed under the assumption that channel values between the transmitting and receiving antennas are uncorrelated.

Regarding this, a broadcasting system has a high probability of correlation between transmitting and receiving antennas, unlike mobile communication. Hence, there arises the issue of performance degradation prevention.

Document US 2008/037679 A1 describes a base station that communicates with subscriber stations in an OFDM wireless network. The base station transmits a first data stream and a second data stream to a subscriber station using a first virtual antenna and a second virtual antenna. The base station allocates first data symbols associated with the first data stream to be transmitted from the first virtual antenna in a first selected group of subbands of OFDM subcarriers and allocates second data symbols associated with the first data stream to be transmitted from the second virtual antenna in a second selected group of subbands of OFDM subcarriers.

### Summary of the Invention

**The invention is defined in independent claims 1 and 5.**

It is, therefore, an object of the present invention to provide a method for increasing the transmission efficiency of an MIMO system using unequal transmission power.

Another object of the present invention is to provide a method for adjusting transmission power to be equal for a transmission signal output from each amplifier connected to antennas constituting multiple antennas.

Yet another object of the present invention is to provide a method for adjusting the receiving range of a signal transmitted to each antenna constituting multiple antennas to be equal.

The present invention is directed to solve the problem of unequal transmission power and the resulting problem of isotropic PARR, and additionally solve the problem of non-uniform reception performance caused by asymmetry between the transmitting and receiving antennas when two signals having different phases are transmitted to their respective transmitting antennas by OFDM in the prior art 2x2 spatial multiplexing.

There is provided a method for spatial multiplexing transmission using multiple antennas, the method including the steps of: assigning different transmission power weights to sequentially transmitted signals in a cross-coupled fashion; precoding the sequentially transmitted signals assigned with the transmission power weights; converting the precoded sequentially transmitted signals into parallel transmitted signals; inputting, in a cross-coupled fashion, the parallel transmitted signals into a first amplifier connected to a first antenna constituting the multiple antennas and a second amplifier connected to a second antenna constituting the multiple antennas.

The parallel transmitted signals inputted into the first amplifier and the second amplifier may be input in a cross-coupled fashion every input time.

The parallel transmitted signals inputted into the first amplifier and the second amplifier in a cross-coupled fashion may be input in a cross-coupled fashion at predetermined periods. The predetermined period may be a period of a signal having the highest frequency among the signals constituting the parallel transmitted signals.

**Further,** there is provided an apparatus for spatial multiplexing transmission using multiple antennas, the apparatus including: a precoder for precoding sequentially transmitted signal inputs; a serial-to-parallel converter for converting the precoded sequential transmission signals into parallel transmitted signals; an amplification unit for amplifying the parallel signals; and a multiple antenna unit for transmitting the amplified signals, wherein the amplification unit includes a plurality of amplifiers connected one to one to each antenna constituting the multiple antenna unit, different transmission power weights are assigned to sequentially transmitted signals in a cross-coupled fashion, and the serial-to-parallel converter inputs the converted parallel transmitted signals into the plurality of amplifiers in a cross-coupled fashion.

The parallel transmitted signals inputted into the first amplifier and the second amplifier in a cross-coupled fashion may be input in a cross-coupled fashion every input time.

The parallel transmitted signals inputted into the first amplifier and the second amplifier in a cross-coupled fashion may be input in a cross-coupled fashion at predetermined periods. The predetermined period may be a period of a signal having the highest frequency among the signals constituting the parallel transmitted signals.

The present invention is directed to solve the problem of unequal transmission power and the resulting problem of isotropic PARR, and additionally solve the problem of non-uniform reception performance caused by asymmetry between the transmitting and receiving antennas when two signals having different phases are transmitted to their respective transmitting antennas by OFDM in the prior art 2x2 spatial multiplexing.

According to the present invention, the transmission efficiency of an MIMO system using unequal transmission power can be increased.

According to the present invention, transmission power can be adjusted to be equal for a transmission signal output from each amplifier connected to antennas constituting multiple antennas.

According to the present invention, the receiving range of a signal transmitted to each antenna constituting multiple antennas can be adjusted to be equal.

The present invention has solved the problem of unequal transmission power and the resulting problem of isotropic PARR, and additionally solve the problem of non-uniform reception performance caused by asymmetry between the transmitting and receiving antennas when two signals having different phases are transmitted to their respective transmitting antennas by OFDM in the prior art 2x2 spatial multiplexing.

## Brief Description of the Drawings

The above and other objects and features of the present invention will become apparent from the following description of preferred embodiments given in conjunction with the accompanying drawings, in which:

FIG. 1 illustrates a schematic configuration of an MIMO system using unequal transmission power;
FIG. 2 is a view schematically explaining a MIMO system using unequal transmission power;
FIG. 3 is a view schematically explaining one example of a method for transmitting a signal in an MIMO system using unequal transmission power;
FIG. 4 schematically illustrates a method for equalizing the transmission power for each antenna in an MIMO system using unequal transmission power according to the present invention;
FIG. 5 is a sequential chart schematically explaining a method for transmitting a signal using unequal transmission power at a transmitting end of the MIMO system to which the present invention is applied;
FIG. 6 is an OFDM transmission structure of a spatial multiplexing technique;
FIG. 7 shows a proposed transmission system structure;
FIG. 8 shows a detailed structure of an MUX block; and
FIG. 9 shows a detailed structure of MUXi.

## Detailed Description of the Embodiments

The present invention relates to a method which allows transmission powers output from each antenna to have the same value if different modulation methods and different transmission powers are applied to a plurality of transmitting antennas in an MIMO system that improves reception performance by directly connecting a conventional spatial multiplexing (MIMO) system and a precoder in a mobile broadcasting channel environment.

To prevent performance degradation caused by the correlation between transmitting and receiving antennas, an MIMO method may be applied in a correlated fading channel environment.

For example, in 2X2 MIMO, in both cases where the same modulation is applied to two transmitting antennas and where different modulations are applied to the two transmitting antennas, when Quadrature Phase-Shift Keying (QPSK) is applied and Quadrature Amplitude Modulation (16QAM) is applied to the other antenna, the method as shown in FIG. 1 can be applied.

FIG. 1 illustrates a schematic configuration of an MIMO system using unequal transmission power. Different transmission powers are assigned to transmission signals $x_1$ and $x_2$ of an input signal vector $x=[x_1, x_2]^T$. At this point, the overall transmission power of the two antennas is always constant. The two transmission signals $x_1$ and $x_2$ are precoded into $r=[r_1, r_2]^T$ by $\Theta$, and then transmitted through each transmitting antenna 120. $\Theta$ means a precoding matrix.

A reception signal $y=[y_1, y_2]^T$ received by the receiving antenna 130 may be expressed by a channel matrix H as shown in Equation 1:

[Equation 1]

$$y = \begin{pmatrix} y_1 \\ y_2 \end{pmatrix} = \begin{pmatrix} h_{1,1} & h_{1,2} \\ h_{2,1} & h_{2,2} \end{pmatrix} \begin{pmatrix} r_1 \\ r_2 \end{pmatrix} = Hr$$

The reception signal is demodulated by an ML decoder 140.

As shown in FIG. 1, if different powers are used for different signals, correlation occurs between the precoded two signals r1 and r2. In this manner, when mutual correlation occurs between channel values because correlation exists between output signals, the signal to noise ratio (SNR) of a signal received by the transmitting antenna increases due to a transmission beamforming phenomenon. Accordingly, the reception performance is improved.

According to this method, when the correlation between transmission and reception signals is large, the reception performance is enhanced, but different transmission powers are used between transmission signals. That is, the transmission power of each transmitting antenna constituting the multiple antenna system is different from each other. Accordingly, when transmission signals are input into an amplifier (HPA: High Power Amplifier) having the same characteristics, the transmission power for an output signal of each amplifier is different.

Due to this difference in transmission power, the reception range of transmission signals available for a receiving end is varied. According to the present invention, if the reception range for a transmission signal can be made equal in unequal transmission power MIMO transmission, thereby increasing transmission efficiency.

FIG. 2 is a view schematically explaining a MIMO system using unequal transmission power. In FIG. 2, the MIMO system having a 2X2 structure will be described by way of example.

Referring to FIG. 2, different transmission powers a, 1-a are applied to transmission signals x1 and x2. The signals r1 and r2 having passed through the precoder 210 are converted from sequentailly transmitted signals into parallel transmitted signals through a serial-to-parallel converter 220. The transmission signals converted into the paralle transmittted signals are input into amplifiers 230 and 240, and the transmitted through antennas 250 and 260.

At this point, the transmission powers assigned to the transmission signals x1 and x2 are different from each other, and therefore the powers for r1 and r2 having passed thorugh the precoder 210 are also different from each other. As a result, the powers of final signals output through the amplifiers 230 and 240 having the same charactersitics are different from each other, too. Accordingly, the reception ranges for the signals are different from each other.

Hereinafter, signals transmitted over time for each transmitting antenna will be described concretely. In the 2X2 MIMO system, the signals transmitted to each transmitting antenna (antenna 1, antenna 2) will be described by time slot as shown in the following Equation:

[Equation 2]

$$t = t_1 : (ant1\ , ant2) = (r_1\ , r_2) \sim (\sqrt{\alpha} x_1\ , \sqrt{1-\alpha} x_2)$$

$$t = t_2 : (ant1\ , ant2) = (r_3\ , r_4) \sim (\sqrt{\alpha} x_3\ , \sqrt{1-\alpha} x_4)$$

$$t = t_3 : (ant1\ , ant2) = (r_5\ , r_6) \sim (\sqrt{\alpha} x_5\ , \sqrt{1-\alpha} x_6)$$

$$t = t_4 : (ant1\ , ant2) = (r_7\ , r_8) \sim (\sqrt{\alpha} x_7\ , \sqrt{1-\alpha} x_8)$$

...........

$$t = t_n : (ant1\ , ant2) = (r_{2n}\ , r_{2n-1}) \sim (\sqrt{\alpha} x_{2n}\ , \sqrt{1-\alpha} x_{2n-1})$$

where the (average) transmission power for transmission signals of the two transmitting antennas (ant1, ant2) may be equal, and the reception range for the transmission signals may be the same.

An example of a method for transmission using unequal transmission power MIMO will be described concretely.

FIG. 3 is a view schematically explaining one example of a method for transmitting a signal in an MIMO system using unequal transmission power.

The signals $r_n$, $r_{n+1}$ to be transmitted can be obtained by precoding the signals $x_n$, $x_{n+1}$. Since $x_n$, $x_{n+1}$ are assigned with different transmission powers from each other, the transmission powers for the precoded signals $r_n$, $r_{n+1}$ are also different from each other. Accordingly, the reception range of signals to be transmitted to antennas 340 and 350 through the amplifiers 320 and 330 of the same charactersitics via the serial-to-parallel converter 310 are varied.

In the MIMO system, transmission efficiency can be improved by transmitting signals using spatial multiplexing. At this point, if the reception ranges of the signals are different from each other, the transmission efficiency of the system converges to a narrower reception range.

Accordingly, in order to solve the problem of variations in the reception range for transmission signals, a method for making equal the average power for signals output from each amlifier can be taken into account.

In the present invention, the average value of transmission power for a signal to be transmitted to each antenna can be made equal by inputting, in a cross-coupled fashion, signals to be transmitted to the amplifiers connected one to one to each antenna constituting the multiple antennas of the MIMO system. At this point, unequal transmission power weights $\sqrt{\alpha}$, $\sqrt{1-\alpha}$ are allocated to the transmission signal x. Thus, different transmission powers are assigned to the signals r to be transmitted in a cross-coupeld fashion.

The transmitted signals r are input into each amplifier in a cross-coupled fashion.

The signals to be input into each amplifier may be input into each amplifier in a cross-coupled fashion every input time. For example, in the 2X2 MIMO system, if $r_n$ is input into the amplifier connected to the first antenna, $r_{n+1}$ is input into the amplifier conencted to the second antenna, the $r_{n+2}$ is input into the amplifier connected to the second antenna, and then $r_{n+3}$ is input into the amplifier connected to the first antenna.

Moreover, the signals input into each amplifier may be input into each amplifier in a cross-coupled fashion at predetermined periods. In this case, the predetermined period may conform to a period of the highest frequency among the frequencies of each signal constituting the transmission signals. For example, in the 2X2 MIMO system, if the period for a signal converted into a parallel transmitted signal corresponds to an n number of signals, the odd-numbered signals among the signals $r_1$ to $r_n$ are input into the amplifier connected to the first antenna, and the even-numbered signals are input into the amplifier connected to the second antenna: whereas the odd-numbered signals among the signals $r_{n+1}$ to $r_{2n}$ are input into the amplifier connected to the second antenna, and the even-numbered signals are input into the amplifier connected to the first antenna, thereby making equal the average transmission power for a signal tranmsmitted to each antenna.

As the average transmission power of signals to be transmitted to each antenna is made equal, the reception range of each signal can be adjusted.

FIG. 4 schematically illustrates a method for equalizing the transmission power for each antenna in an MIMO system using unequal transmission power according to the present invention. In FIG. 4, one example of the present invention is described with respect to the case where signals to be transmitted to an amplifier connected to each antenna are input in a cross-coupled fashion every input time.

Referring to FIG. 4, the signals r having passed through the serial-to-parallel converter 410 are input into amplifiers 420 and 430 in a cross-coupled fashion every input time, and thereafter transmitted through antennas 440 and 450.

Signals input into each amplifier connected one to one to each antenna constituting the multiple antennas will be described by input period as shown in Equation 3:(n means even numbers)

[Equation 3]

$$t = t_1 : (ant1, ant2) = (r_1, r_2) \sim (\sqrt{\alpha} x_1, \sqrt{1-\alpha} x_2)$$

$$t = t_2 : (ant1, ant2) = (r_4, r_3) \sim (\sqrt{1-\alpha} x_4, \sqrt{\alpha} x_3)$$

$$t = t_3 : (ant1, ant2) = (r_5, r_6) \sim (\sqrt{\alpha} x_5, \sqrt{1-\alpha} x_6)$$

$$t = t_4 : (ant1, ant2) = (r_8, r_7) \sim (\sqrt{1-\alpha} x_8, \sqrt{\alpha} x_7)$$

...........

$$t = t_{n-1} : (ant1, ant2) = (r_{2n-3}, r_{2n-2}) \sim (\sqrt{\alpha} x_{2n-3}, \sqrt{1-\alpha} x_{2n-2})$$

$$t = t_n : (ant1, ant2) = (r_{2n}, r_{2n-1}) \sim (\sqrt{1-\alpha} x_{2n}, \sqrt{\alpha} x_{2n-1})$$

As shown in Equation 3, the signals r obtained by precoding the transmission signals x assigned with transmission power weights $\sqrt{\alpha}$, $\sqrt{1-\alpha}$ in a cross-coupled fashion are input into the amplifier connected to the first antenna ant1. The signals r obtained by precoding the transmission signals x assigned with transmission power weights $\sqrt{\alpha}$, $\sqrt{1-\alpha}$ in a cross-coupled fashion are input into the amplifier connected to the second antenna ant2. At this point, in order to keep constant the overall transmission power for each time period, the transmission power weights assigned to each antenna are different from each other.

FIG. 5 is a sequential chart schematically explaining a method for transmitting a signal using unequal transmission power at a transmitting end of the MIMO system to which the present invention is applied.

Referring to FIG. 5, the transmission power weights $\sqrt{\alpha}$, $\sqrt{1-\alpha}$ are assigned to the transmission signals in a cross-coupled fashion (S510). These signals are sequentially input into the precoder.

The precoder precodes input signals in order to transmit the signals in a spatial multiplexing manner by a multiple antenna system (S520).

The precoded signals are converted from sequentailly transmitted signals into parallel transmitted signals through a serial-to-parallel converter (S530).

The transmission signals converted into the paralle transmittted signals are input into amplifiers(S540). The parallel transmission signals are input one by one into each amplifier. At this point, the parallel transmission signals may be input in a cross-coupled fashion for every input time, or may be input in a cross-coupled fashion at predetemrined periods.

The input signals are amplified in the amplifier (S550). Thereafter, the signals are transmitted through multiple antennas (S560).

In the description of the present speification, operations perofrmed in a communication network are done in a process in which a system (e.g., server) in charge of the correpsonding communicatin network controls the network and transmits data, or the operations may be performed in a terminal coupled to the corresponding network.

FIG. 6 shows a combined system of a spatial multiplexing technique using two transmitting antennas in a wireless communication environment and OFDM modulation.

$\vec{r} = [r_{1,1},r_{2,1},r_{1,2},r_{2,2},\cdots,r_{1,N},r_{2,N}]$ at the input end of FIG. 6 is a transmission signal vector of size 2N to be transmitted, where $r_{1,i},r_{2,i}$, $i \in \{1,2,...N\}$ respectively have the signal phases $S_1$ and $S_2$ of the average power $E\{|r_{1,i}|^2\} = E_1$ and $E\{|r_{2,i}|^2\} = E_2$. In the conventional spatial multiplexing technique, first, as shown in FIG. 6, the transmission signal vector $\vec{r}$ is divided into two sub signal vectors $\vec{r}_1 = [r_{1,1},r_{1,2},\cdots,r_{1,N}]$, $\vec{r}_2 = [r_{2,1},r_{2,2},\cdots,r_{2,N}]$, and then transmitted to each transmitting antenna in the OFDM manner of each IFFT (Inverse Fast Fourier Transform) size N. As a result, $y_1 = IFFT(r_{1,1},r_{1,2},\cdots,r_{1,N})$, and $y_2 = IFFT(r_{2,1},r_{2,2},\cdots,r_{2,N})$. Therefore, when the average power of a signal to be transmitted to each antenna is calculated, $E\{|y_1|^2\} = NE_1$, $E\{|y_2|^2\} = NE_2$, and the PARR values are as follows: $PAPR_{y_1} = \max(y_1)/(NE_1)$ $PAPR_{y_2} = \max(y_2)/(NE_2)$.

If two transmission signals $r_{1,i}$ and $r_{2,i}$ in FIG. 6 have the same signal phase ($S_1$=$S_2$, $E_1$= $E_2$), signals y1 and y2 transmitted to the last transmitting antenna have the same avearge power value and PARR value. However, if $r_{1,i}$ and $r_{2,i}$ have different pahses of different average powers average powers $E_1 \neq E_2$, y1 and y2 inevitably have different average power values $NE_1 \neq NE_2$, and have different PARR values $PAPR_{y1} \neq PAPR_{y2}$. In this case, a problem occurs to the high power amplifier HPA of the rear end in terms of perforamnce, thereby degrading reception performance.

Moreover, if the channel charactersitics of each transmitting and reception antenna are asymmetric, when only $r_{1,i}$ is transmitted to the firsst transmitting antenna, and only $r_{2,i}$ is transmitted to the second transmitting antenna, the reception performance varies depending on the asymmetric characteristics of transmitting and receiving antennas. In particular, the above phenomenon will not be desriable, taking into account the purpose of gauranteeing consistent system performance in any channel envìroinment.

Due to these reasons, if a spatial multiplexing system for transmitting signals of different phases and OFDM are combined, there arises a demand for a transmission technique that can solve the above-mentioned problems of unequal charactersitics of OfDM signals and uneuqal reception perforamnce caused by asymmetry between the transmitting and receiving antennas.

The bacic configuraiton of the present invention is as shown in FIG. 7. First, as shown in FIG. 6, the proposed system divides the transmission signal vector $\vec{r}$ of size 2N into two sub signal vectors $\vec{r}_1$ and $\vec{r}_2$ of size N. Next, the proposed structure generates two new sub signal vectors $\vec{s}_1 = [s_{1,1},s_{1,2},\cdots,s_{1,N}]$, $\vec{s}_2 = [s_{2,1},s_{2,2},\cdots,s_{2,N}]$ of size N by an MUX block using $\overrightarrow{sel} = [sel_1,sel_2,\cdots,sel_N]$ as shown in FIG. 7 and transmits them to each transmitting antennas through OFDM. The detailed structure of the MUX block is as shown in FIGS. 8 and 9.

The detailed structure of FIGS. 8 and 9 are as follows. First, as shown in FIG. 8, the signals in $\vec{r}_1$ and $\vec{r}_2$ are sequentially bound to generate a total N number of signal pairs $(r_{1,i},r_{2,i})$, $i \in \{1,2,\cdots,N\}$. Each of the thus-geenrate signal pairs $(r_{1,i},r_{2,i})$ are generated into the total N number of new signal pairs as shown in the following Equation 4 according to the value of $sel_i$ as show I FIG. 9:

[Equation 4]

$$(s_{1,i},s_{2,i}) = \begin{cases} (r_{1,i},r_{2,i}), & sel_i = 0 \\ (r_{2,i},r_{1,i}) & sel_i = 1 \end{cases}$$

As a result, regarding Equation 4 and the subsequent OFDM transmission structure, if $sel_i = 0$, and $r_{1,i}$ and $r_{2,i}$ are respectively transmitted to the first and second transmitting antennas in the conventional method of FIG. 6. If $sel_i$ = 1, they are respectively transmitted to the first and second transmitting antennas, which is reverse to the above order.

Especially, in the proposed structure, half all the signal pairs ($r_{1,i}$,$r_{2,i}$) are always reversed in position under the restrictive condition of $\sum_{i=1}^{N} sel_i = N/2$.

For example, if $i \in \{1,2,\cdots,N/2\}$, and if $i \in \{N/2+1,N/2+2,\cdots,N\}$, $sel_i = 1$. In this case, the final OFDM signal transmitted to each transmitting antenna is as shown in the following Equation 5.

[Equation 5]

$$y_1 = IFFT(r_{1,1}, r_{1,2}, \cdots, r_{1,N/2}, r_{2,N/2+1}, r_{2,N/2+2}, \cdots, r_{2,N}),$$

$$y_2 = IFFT(r_{2,1}, r_{2,2}, \cdots, r_{2,N/2}, r_{1,N/2+1}, r_{1,N/2+2}, \cdots, r_{1,N})$$

Moreover, if $i \in \{1,3,\cdots,N-1\}$, $sel_i = 0$, and if $i \in \{2,4,\cdots,N\}$, $sel_i = 1$. In this case, the final OFDM signal transmitted to each transmitting antenna is as shown in the following Equation 6.

[Equation 6]

$$y_1 = IFFT(r_{1,1}, r_{2,2}, r_{1,3}, r_{2,4}, \cdots, r_{1,N-1}, r_{2,N}),$$

$$y_2 = IFFT(r_{2,1}, r_{1,2}, r_{2,3}, r_{1,4}, \cdots, r_{2,N-1}, r_{1,N})$$

Using this MUX condition $\sum_{i=1}^{N} sel_i = N/2$, a total N/2 number of $r_{1,i}$ having a $S_1$ phase structure and $r_{2,i}$ having a $S_2$ phase structure are always included in the two OFDM transmission signals $y_1 = IFFT(s_{1,1},s_{1,2},\cdots,s_{1,N})$ and $y_2 = IFFT(s_{2,1},s_{2,2},\cdots,s_{2,N})$, unlike FIG. 6 in the prior art. Therefore, $y_1$ and $y_2$ have the same averag power value $E\{|y_1|^2\} = E\{|y_2|^2\} = N(E_1+E_1)/2$ and the PARR value $PAPR_{y_1} = PAPR_{y_2} = \max(y_1)/(N(E_1+E_1)/2)$

Moreover, in the structure of FIG. 6, when each of the transmitting and receiving antennas is asymmetrical, only the signals $r_{1,i}$ of $S_1$ phase structure is transmitted to the first transmitting antenna, and only the signals $r_{2,i}$ of $S_2$ phase structure are transmitted to the second transmitting antenna. On the other hand, in the new proposed structure of the FIG. 7, half the signals $r_{1,i}$ of the $S_1$ phase structure and the signals $r_{2,i}$ of the $S_2$ phase structure are simultaneously transmitted to both of the two transmitting antennas. Hence, the average reception performance can be obtained without any effect from a specific phase structure.

The present invention can be implemented by making the difference of the numbers of 0 and 1 of input signal pattern in a cross-coupled fashion($sel_i$) when a ratio of input signals in a cross-coupled fashion is not same in the transmitted symbols.

Throughout the description, where apparatuses and methods are described as having, including, or comprising specific components, it is contemplated that the components except for the corresponding components are not be excluded, and that additional components may be included in implementations of the present inventeion or the scope of the present invention.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the scope of the appended claims.

## Claims

1. A method for spatial multiplexing transmission using multiple antennas, the method comprising the steps of:

   assigning (S510) different transmission power weights to sequentially transmitted signals;
   precoding (S520) the sequentially transmitted signals assigned with the transmission power weights;
   converting (S530) the precoded sequentially transmitted signals into parallel transmitted signals;
   inputting (S550, S560) the parallel transmitted signals into a first amplifier connected to a first antenna constituting the multiple antennas and a second amplifier connected to a second antenna constituting the multiple antennas in a cross-coupled fashion so that the average value of transmission power of the signal transmitted from the first antenna is equal to the average value of transmission power of the signal transmitted from the second antenna.

2. The method of claim 1, wherein the parallel transmitted signals inputted into the first amplifier and the second amplifier are input in a cross-coupled fashion every input time.

3. The method of claim 1, wherein the parallel transmitted signals inputted into the first amplifier and the second amplifier in a cross-coupled fashion are input in a cross-coupled fashion at predetermined periods.

4. The method of claim 3, wherein the predetermined period may be a period of a signal having the highest frequency among the signals constituting the parallel transmitted signals.

5. An apparatus for spatial multiplexing transmission using multiple antennas, the apparatus comprising:

   a precoder for precoding sequentially transmitted signal inputs;
   a serial-to-parallel converter (410) for converting the precoded sequential transmission signals into parallel transmitted signals;
   an amplification unit (420, 430) for amplifying the parallel signals; and
   a multiple antenna unit (440, 450) for transmitting the amplified signals,
   wherein the amplification unit (420, 430) includes a plurality of amplifiers connected one to one to each antenna constituting the multiple antenna unit (440, 450),
   different transmission power weights are assigned to sequentially transmitted signals, and
   the serial-to-parallel converter (410) inputs the converted parallel transmitted signals into the plurality of amplifiers in a cross-coupled fashion so that the average value of transmission power of the signal transmitted from the first antenna is equal to average value of the transmission power of the signal transmitted from the second antenna.

6. The apparatus of claim 5, wherein the parallel transmitted signals inputted into the plurality of amplifiers in a cross-coupled fashion are input in a cross-coupled fashion every input time.

7. The apparatus of claim 5, wherein the parallel transmitted signals inputted into the plurality of amplifiers in a cross-coupled fashion are input in a cross-coupled fashion at predetermined periods.

8. The apparatus of claim 7, wherein the predetermined period for inputting parallel transmitted signals into the plurality of amplifiers in a cross-coupled fashion is a period of a signal having the highest frequency among the signals constituting the parallel transmitted signals.

**Patentansprüche**

1. Verfahren zum räumlichen Multiplexieren einer Übertragung unter Verwendung mehrerer Antennen, wobei das Verfahren die folgenden Schritte umfasst:

   Zuweisen (S510) unterschiedlicher Übertragungsleistungsgewichte zu nacheinander übertragenen Signalen;
   Vorcodieren (S520) der nacheinander übertragenen Signale, denen Übertragungsleistungsgewichte zugewiesen worden sind;
   Umsetzen (S530) der vorcodierten nacheinander übertragenen Signale in parallele übertragene Signale;
   Eingeben (S550, S560) der parallelen übertragenen Signale in einen ersten Verstärker, der mit einer zu den mehreren Antennen gehörenden ersten Antenne verbunden ist, und in einen zweiten Verstärker, der mit einer zu den mehreren Antennen gehörenden zweiten Antenne verbunden ist, auf kreuzgekoppelte Weise, so dass der Durchschnittswert der Übertragungsleistung des Signals, das von der ersten Antenne übertragen wird, gleich dem Durchschnittswert der Übertragungsleistung des Signals, das von der zweiten Antenne übertragen wird, ist.

2. Verfahren nach Anspruch 1, wobei die parallelen übertragenen Signale, die in den ersten Verstärker und in den zweiten Verstärker eingegeben werden, zu jeder Eingabezeit auf kreuzgekoppelte Weise eingegeben werden.

3. Verfahren nach Anspruch 1, wobei die parallelen übertragenen Signale, die in den ersten Verstärker und in den zweiten Verstärker auf kreuzgekoppelte Weise eingegeben werden, in vorgegebenen Perioden auf kreuzgekoppelte Weise eingegeben werden.

4. Verfahren nach Anspruch 3, wobei die vorgegebene Periode eine Periode eines Signals sein kann, das die höchste Frequenz unter den Signalen besitzt, die zu den parallelen übertragenen Signalen gehören.

5. Vorrichtung zum räumlichen Multiplexierung einer Übertragung unter Verwendung mehrerer Antennen, wobei die Vorrichtung Folgendes umfasst:

   einen Vorcodierer zum Vorcodieren nacheinander übertragener Signaleingänge;
   einen Seriell/Parallel-Umsetzer (410) zum Umsetzen der vorcodierten, aufeinander folgenden übertragenen Signale in parallele übertragene Signale;
   eine Verstärkungseinheit (420, 430) zum Verstärken der parallelen Signale; und
   eine Mehrfachantenneneinheit (440,450) zum Übertragen der verstärkten Signale,
   wobei die Verstärkungseinheit (420, 430) mehrere Verstärker enthält, die eins zu eins mit jeder Antenne, die die Mehrfachantenneneinheit (440, 450) bilden, verbunden sind, und
   wobei nacheinander übertragenen Signalen unterschiedliche Übertragungsleistungsgewichte zugewiesen sind und
   der Seriell/Parallel-Umsetzer (410) die umgesetzten parallelen übertragenen Signale in die mehreren Verstärker auf eine kreuzgekoppelte Weise eingibt, so dass der Durchschnittswert der Übertragungsleistung des Signals, das von der ersten Antenne übertragen wird, gleich dem Durchschnittswert der Übertragungsleistung des Signals, das von der zweiten Antenne übertragen wird, ist.

6. Vorrichtung nach Anspruch 5, wobei die parallelen übertragenen Signale, die in die mehreren Verstärker auf eine kreuzgekoppelte Weise eingegeben werden, zu jeder Eingabezeit auf eine kreuzgekoppelte Weise eingegeben werden.

7. Vorrichtung nach Anspruch 5, wobei die parallelen übertragenen Signale, die in die mehreren Verstärker auf eine kreuzgekoppelte Weise eingegeben werden, in vorgegebenen Perioden auf eine kreuzgekoppelte Weise eingegeben werden.

8. Vorrichtung nach Anspruch 7, wobei die vorgegebene Periode für die Eingabe paralleler übertragener Signale in die mehreren Verstärker auf eine kreuzgekoppelte Weise eine Periode eines Signals ist, das unter den Signalen, die die parallelen übertragenen Signale bilden, die höchste Frequenz besitzt.

## Revendications

1. Procédé de transmission de multiplexage spatial qui utilise plusieurs antennes, le procédé comprenant les étapes :

   d'affectation (S510) de différentes pondérations de puissance de transmission à des signaux transmis séquentiellement ;
   de pré-codage (S520) des signaux transmis séquentiellement auxquels ont été affectées les pondérations de puissance de transmission ;
   de conversion (S530) des signaux pré-codés transmis séquentiellement en signaux transmis en parallèle ;
   de remise (S550, S560) des signaux transmis en parallèle à un premier amplificateur relié à une première antenne qui constitue les multiples antennes et à un second amplificateur relié à une seconde antenne qui constitue les multiples antennes en couplage croisé de sorte que la valeur moyenne de la puissance de transmission du signal transmis par la première antenne soit égale à la valeur moyenne de la puissance de transmission du signal transmis par la seconde antenne.

2. Procédé selon la revendication 1, dans lequel les signaux parallèles transmis remis au premier amplificateur et au second amplificateur sont remis en couplage croisé à chaque moment de remise.

3. Procédé selon la revendication 1, dans lequel les signaux parallèles transmis remis au premier amplificateur et au second amplificateur en couplage croisé sont remis en couplage croisé à des périodes prédéterminées.

4. Procédé selon la revendication 3, dans lequel la période prédéterminée peut être une période d'un signal qui présente la fréquence la plus élevée parmi les signaux qui constituent les signaux parallèles transmis.

5. Appareil de transmission de multiplexage spatial qui utilise plusieurs antennes, l'appareil comprenant :

   un pré-codeur destiné à pré-coder des signaux transmis séquentiellement ;
   un convertisseur série/parallèle (410) destiné à convertir les signaux de transmission séquentiels pré-codés en signaux parallèles transmis ;
   une unité d'amplification (420, 430) destinée amplifier les signaux parallèles ; et
   une unité à plusieurs antennes (440, 450) destinée à transmettre les signaux amplifiés,
   dans lequel l'unité d'amplification (420, 430) comprend une pluralité d'amplificateurs reliés de manière biunivoque à chaque antenne qui constitue l'unité à plusieurs antennes (440, 450),
   différentes pondérations de puissance de transmission sont affectées aux signaux transmis séquentiellement, et le convertisseur série/parallèle (410) remet les signaux parallèles convertis et transmis à la pluralité d'amplificateurs en couplage croisé de sorte que la valeur moyenne de la puissance de transmission du signal transmis par la première antenne soit égale à la valeur moyenne de la puissance de transmission du signal transmis par la seconde antenne.

6. Appareil selon la revendication 5, dans lequel les signaux parallèles transmis remis à la pluralité d'amplificateurs en couplage croisé sont remis en couplage croisé à chaque moment de remise.

7. Appareil selon la revendication 5, dans lequel les signaux parallèles transmis remis à la pluralité d'amplificateurs en couplage croisé sont remis en couplage croisé à des périodes prédéterminées.

8. Appareil selon la revendication 7, dans lequel la période prédéterminée pour remettre les signaux parallèles transmis à la pluralité d'amplificateurs en couplage croisé est une période d'un signal qui présente la fréquence la plus élevée parmi les signaux qui constituent les signaux parallèles transmis.

FIG. 1

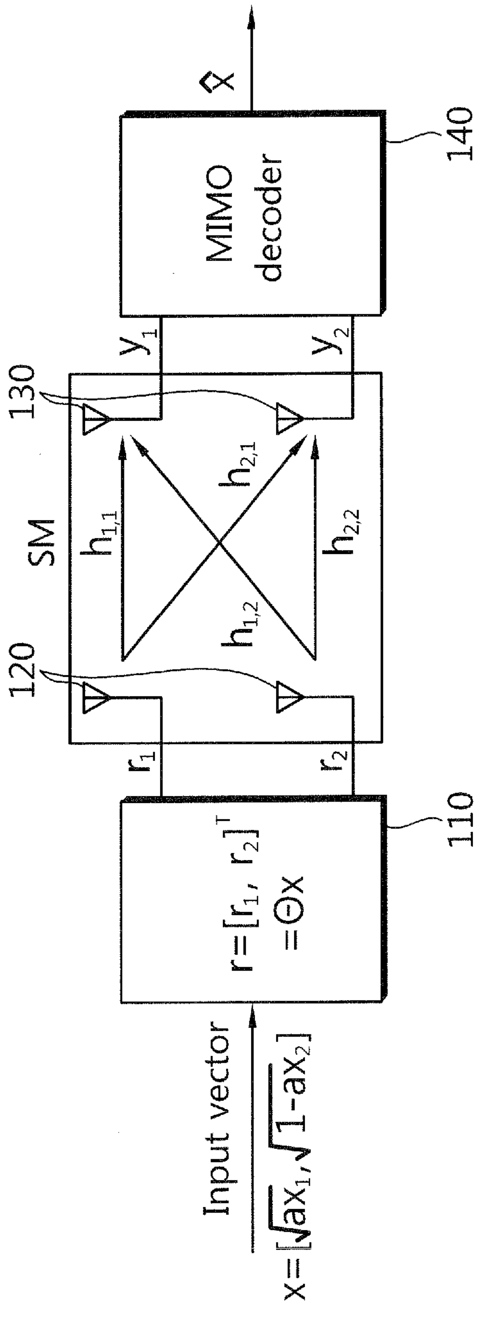
Input vector
$x=[\sqrt{a}x_1, \sqrt{1-a}x_2]$
$r=[r_1, r_2]^T$
$=\Theta x$
110
$r_1$
$r_2$
120
SM
$h_{1,1}$
$h_{1,2}$
$h_{2,1}$
$h_{2,2}$
130
$y_1$
$y_2$
MIMO
decoder
140
$\hat{x}$

FIG. 2

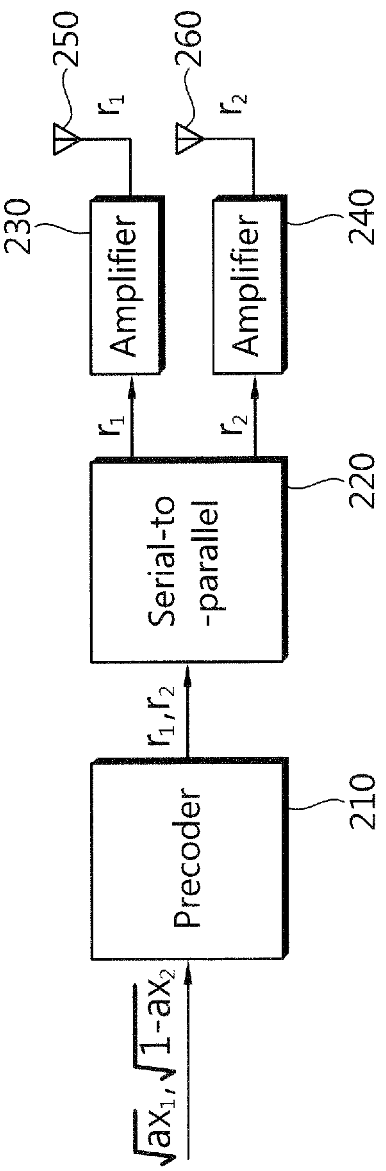
250
260
$r_1$
$r_2$
230
Amplifier
Amplifier
240
$r_1$
$r_2$
Serial-to
-parallel
220
$r_1, r_2$
Precoder
210
$\sqrt{a}x_1, \sqrt{1-a}x_2$

FIG. 3

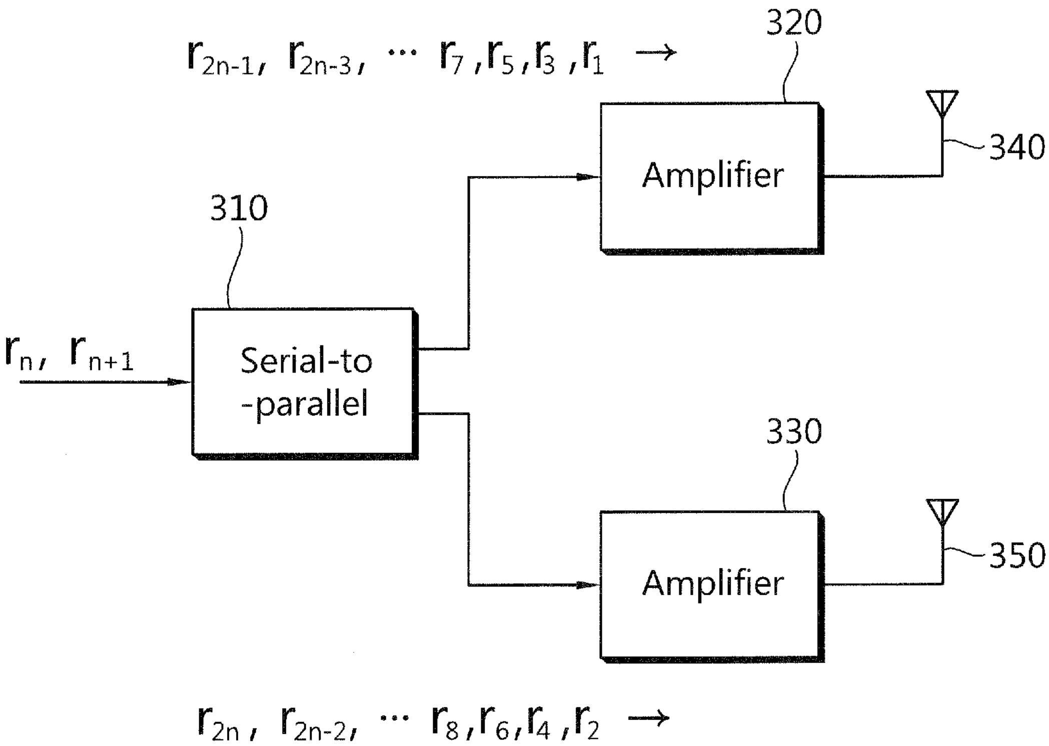
$r_{2n-1}$, $r_{2n-3}$, ··· $r_7$, $r_5$, $r_3$, $r_1$ →
320
Amplifier
340
310
$r_n$, $r_{n+1}$
Serial-to
-parallel
330
Amplifier
350
$r_{2n}$, $r_{2n-2}$, ··· $r_8$, $r_6$, $r_4$, $r_2$ →

FIG. 4

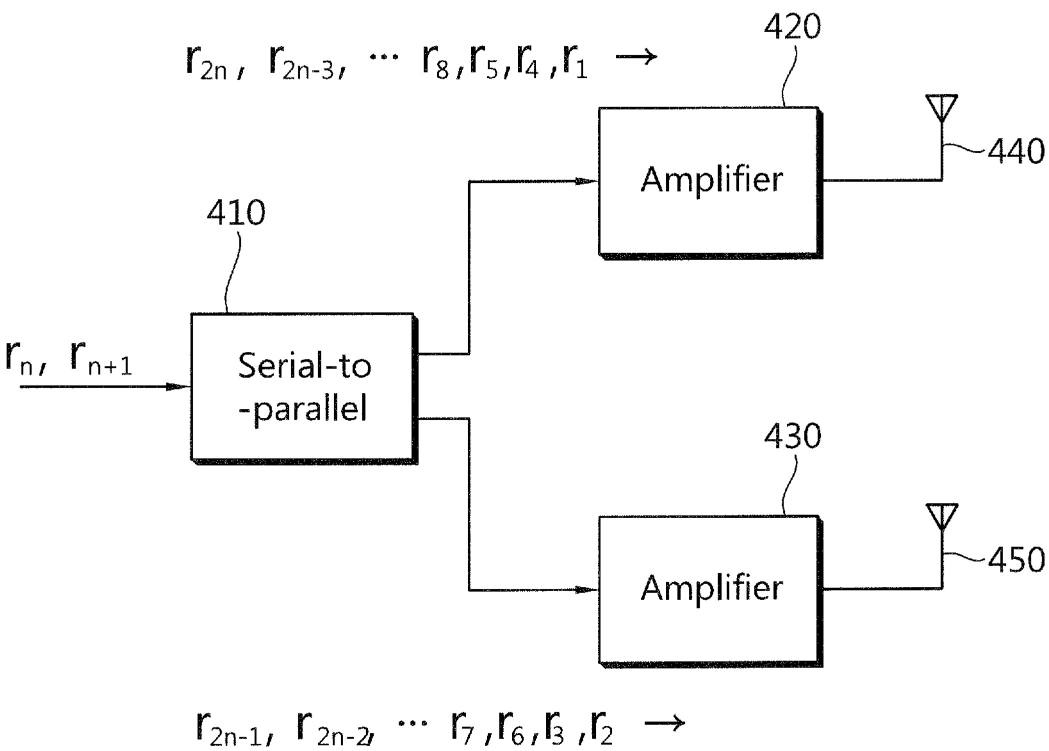
$r_{2n}$, $r_{2n-3}$, … $r_8$, $r_5$, $r_4$, $r_1$ →
420
440
410
Amplifier
$r_n$, $r_{n+1}$
Serial-to
-parallel
430
Amplifier
450
$r_{2n-1}$, $r_{2n-2}$, … $r_7$, $r_6$, $r_3$, $r_2$ →

FIG. 5

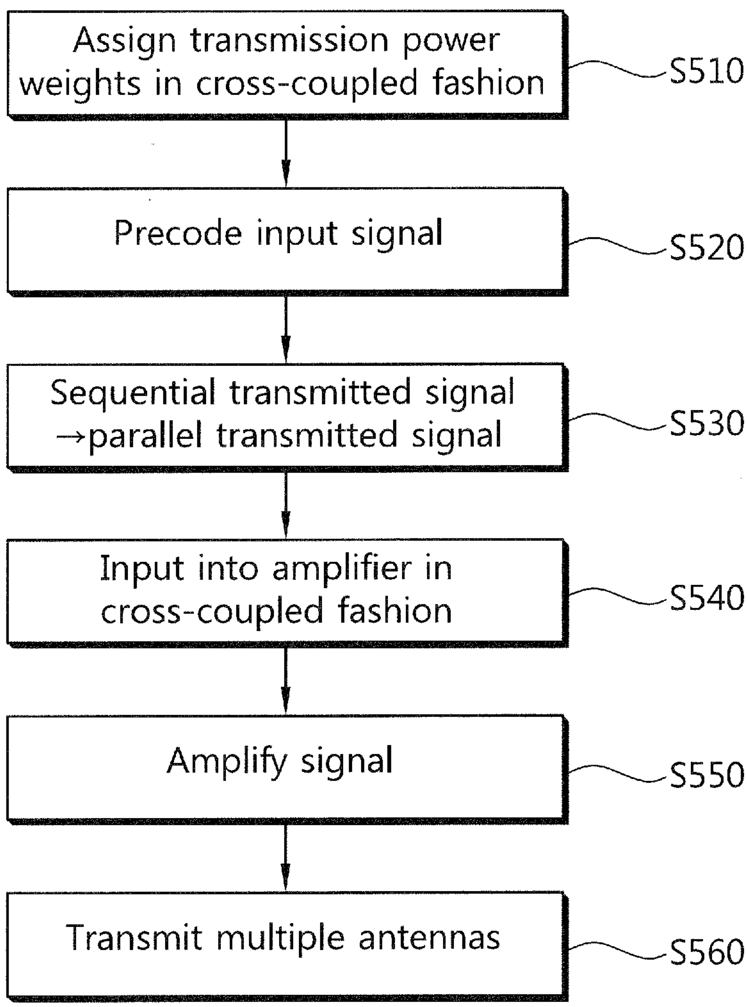
Assign transmission power weights in cross-coupled fashion
S510
Precode input signal
S520
Sequential transmitted signal →parallel transmitted signal
S530
Input into amplifier in cross-coupled fashion
S540
Amplify signal
S550
Transmit multiple antennas
S560

FIG. 6

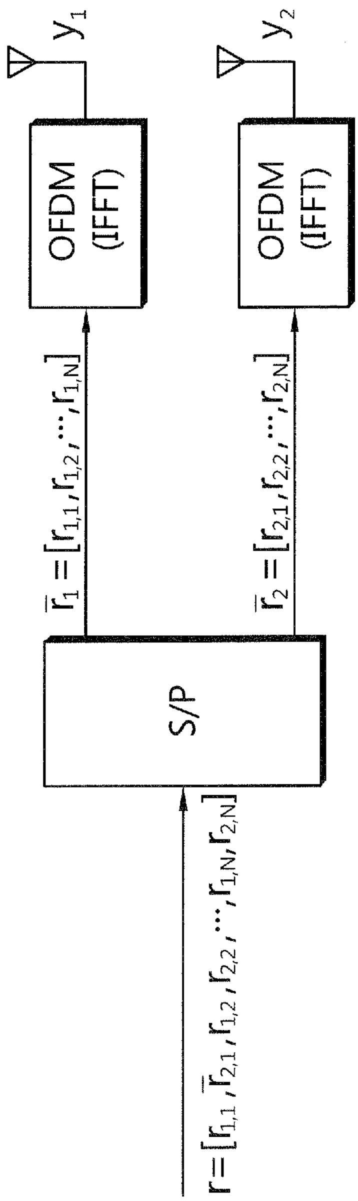
$y_1$
$y_2$
OFDM (IFFT)
OFDM (IFFT)
$\bar{r}_1 = [r_{1,1}, r_{1,2}, \cdots, r_{1,N}]$
$\bar{r}_2 = [r_{2,1}, r_{2,2}, \cdots, r_{2,N}]$
S/P
$r = [r_{1,1}, \bar{r}_{2,1}, r_{1,2}, r_{2,2}, \cdots, r_{1,N}, r_{2,N}]$

FIG. 7

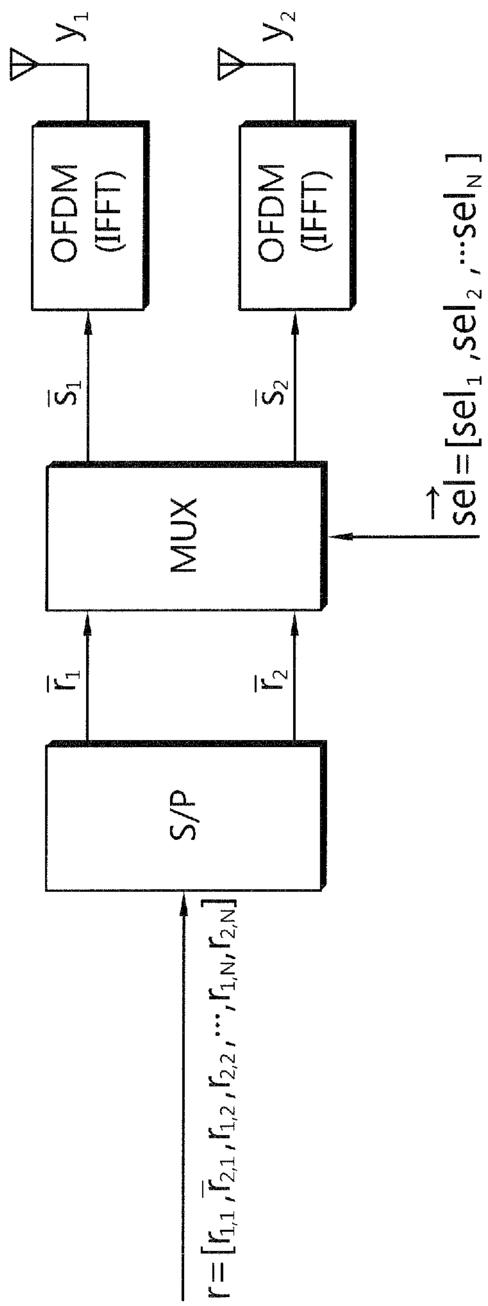
$r=[r_{1,1},\bar{r}_{2,1},r_{1,2},r_{2,2},\cdots,r_{1,N},r_{2,N}]$
S/P
$\bar{r}_1$
$\bar{r}_2$
MUX
$\vec{sel}=[sel_1,sel_2,\cdots sel_N]$
$\bar{s}_1$
$\bar{s}_2$
OFDM (IFFT)
OFDM (IFFT)
$y_1$
$y_2$

FIG. 8

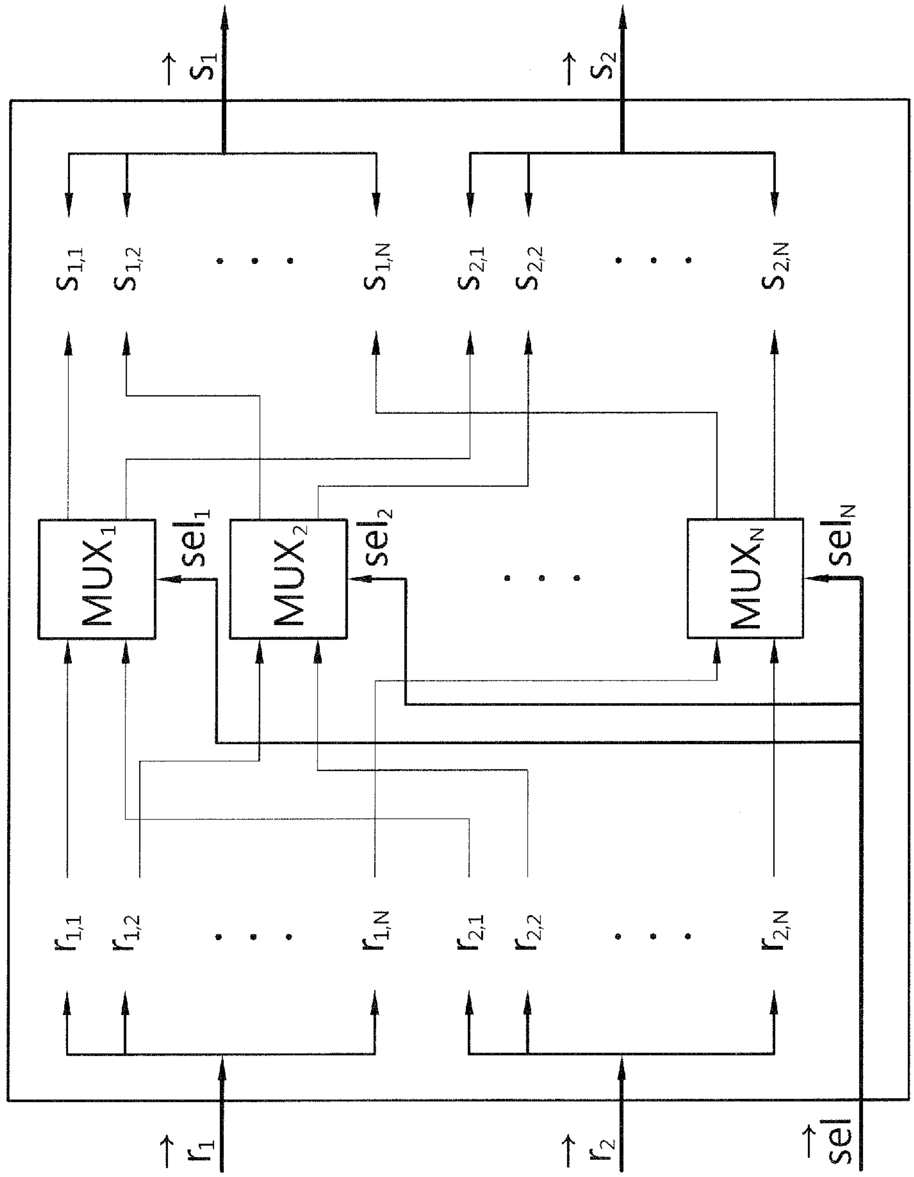

$\vec{s}_1$
$\vec{s}_2$
$s_{1,1}$
$s_{1,2}$
$s_{1,N}$
$s_{2,1}$
$s_{2,2}$
$s_{2,N}$
$MUX_1$
$sel_1$
$MUX_2$
$sel_2$
$MUX_N$
$sel_N$
$r_{1,1}$
$r_{1,2}$
$r_{1,N}$
$r_{2,1}$
$r_{2,2}$
$r_{2,N}$
$\vec{r}_1$
$\vec{r}_2$
$\vec{sel}$

FIG. 9

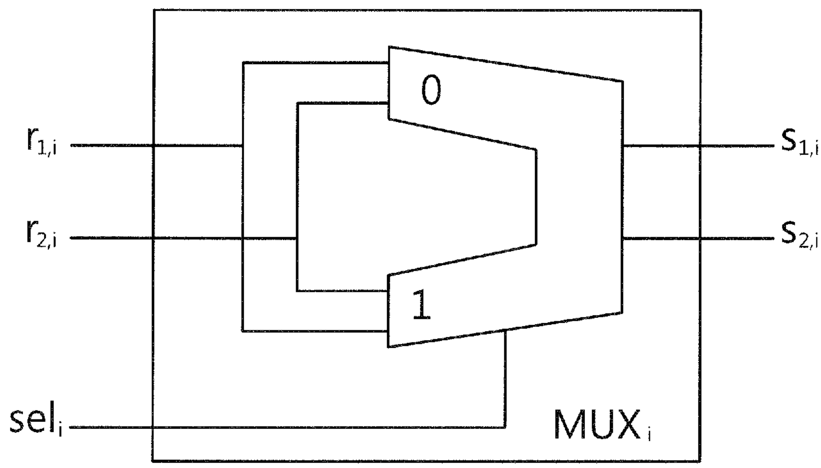

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2008037679 A1